# EUROPEAN PATENT APPLICATION

(11) **EP 1 150 196 A2**
(43) Date of publication of application: **31.10.2001**
(21) Application number: 01109049.5
(22) Date of filing: 11.04.2001
(51) Int. Cl.: G06F 1/00

(54) **Program license key issuing method and issuing system**

(30) Priority: 28.04.2000 JP 2000134234
(71) Applicant: Hitachi, Ltd., Chiyoda-ku, Tokyo 101-8010 (JP)
(72) Inventor: Mougi, Masao, c/o Hitachi, Ltd., Int. Prop. Group, Chiyoda-ku, Tokyo 100-8220 (JP); Honma, Hisao, c/o Hitachi, Ltd., Int. Prop. Group, Chiyoda-ku, Tokyo 100-8220 (JP); Kogai, Makoto, c/o Hitachi, Ltd., Int. Prop. Group, Chiyoda-ku, Tokyo 100-8220 (JP)
(74) Representative: Strehl Schübel-Hopf & Partner

(57) **Abstract**

In performing the issuance of a license key to a user through a selling agent or the like on line, the issuance of the license key is performed from a manufacturer to the selling agent or the like in such a manner that information which the selling agent or the like wants to keep in secret is prevented from being transmitted to the manufacturer. Further, when a deadline of a trial period by a trial license key is coming very close, a special license key which extends the deadline of the trial period is issued. In operation, the sales computer receives client information, a product number and a license program name input by a purchaser computer and transfers such information from which the client information is eliminated to the license issuing computer. The license issuing computer issues the license key when the authentication of the product number is normally finished. Further, the present invention provides a trial license key to a user. When the deadline of the trial period is coming very close so that the extension of the deadline is necessary, a special license key is issued by transmitting the trial license key or the like to the license issuing computer.

## Description

### Background of the Invention

### 1. Field of the Invention

The present invention relates to a method for issuing a license key to make various product programs operable through Internet, and more particularly to a license issuing method which allows a selling agent to perform a filtering of information when the licensing is performed through the selling agent or the like.

### 2. Background of the Invention

Conventionally, as a method for acquiring a license key, there has been a method which acquires a license key from a license provider making use of a network. To a user to whom a license key for making use of a service is given, a self-identifying ID such as an identification number or the like which identifies himself or herself is given. When the license is granted to a user terminal, a terminal ID such as an identification number of the terminal or the like is given. The person who wants to have a service can receive the service from a service provider by inputting a given pass word which is preliminarily determined between the user and the service provider, for example, together with a user ID such as the identification number or a serial number ID which can identify each user individually. Communication means between the service side and the users is disclosed in Japanese Laid-open Patent Publication 335170/1996. A technique which has network nodes to which communication terminals can be connected and gives utilization licenses for information offer services to the communication terminals which are connected to the network adapter nodes has been generally used.

It is often the case that a computer system such as a disc sub system has an optional function which allows the use upon payment of a use charge in addition to programs for operating the system. This optional program is designed such that a producer of the system or the provider of a program provides a key which allows the use of the program which is preliminarily installed in the system or the producer of the system or the provider of the program offers the program itself. Further, in an information equipment such as a computer system, it is often the case that the system is offered from the producer of the system through a seller. In this case, the offer of the program itself or the program key is performed in a form that the seller offers a memory medium which stores the program itself or the program key.

### Summary of the Invention

In a system which allows a client to acquire a given license key from a license issuing computer connected to a network, as information which identifies whether a license acquisition applicant is a purchaser or not, client information (for example, a purchased date, a user name, a user address, a product name or the like) is used. However, in these days where an electronic commerce has been actively transacted and have become popular, it is considered that the license application processing will be performed over or astride several enterprises. On the other hand, since the user information are confidential information for respective enterprises, it is necessary to build up a license issuing system which performs a filtering of information taking these into consideration in advance.

For example, a computer-related information equipment sometimes issue a license which allows the use of an optional program stored in the information equipment through a seller who has sold the information equipment. In this case, a program license issuing person who is also the manufacturer of the program and the information equipment issues the license.

Further, in a data storage system, to build up or to change the constitution of SAN (Storage Area Network) or the like, it is necessary to promptly issue the license for the optional program.

Further, the user can use such a system by acquiring the program use right from a program use right grantor through the network. Accordingly, when such a system will be utilized as main license key acquisition means, it is apparent that the license issuing computer becomes an important infrastructure. However, the conventional license key issuing system has not paid any consideration to a case in which it becomes im possible to access the license issuing computer connected by the network due to some failures.

Accordingly, it is necessary to ensure a plurality of access paths which prevent the failures from affecting the users even when the failures occur in the equipment.

Further, there has been a problem that the confirmation whether the person who requests the issuance of the license is a purchaser or not at the time of issuing the license key has been performed only through the collation of a pass word, a user ID, a serial number or the like. This implies that it is difficult to confirm a counterpart in a face-to-face manner and the possibility that an unfair use occurs is increased corresponding to the increase of cost and attractiveness of a product. Accordingly, it is necessary to provide a mechanism which can enhance the security of the confirmation whether the counterpart with whom data is transacted through the network is truly a purchaser or not and to prove the genuineness of the content.

Further, as a distribution form of a program disclosed in Japanese Laid-open Patent Publication 335170/1996, there is disclosed a technique which stores a program in a CD-ROM and inhibits the operation of software when a given period which corresponding to the duration of time that the program in the CD-ROM is used elapses. Considering users who want to use the program on a trial basis or users who do not want to use the program after using the program for some period, a mode which allows the use of the program with limitation of period has been generally used. However, this technique is a technique which allows the use of the program within the limited period so that, for example, from a view point of the user who actually uses the program to evaluate the software, such a mode is a use mode which suddenly prevents him from using the program ignoring the circumstances of the user and hence, the mode and the consideration from a viewpoint of the availability of the service user is not sufficient.

That is, although the program acquired from the program provider has been used in general based on the use right which is set for a fixed time, a license key which can extend the period free of charge has not been proposed heretofore.

Further, in an environment in which a client acquires a license key from an information storage license computer on a network, it has been difficult for the conventional license issuing system to obtain a desired information license key from a client terminal when a malfunction occurs at a communication terminal or at a service-offer-side license issuing computer equipment or when a malfunction occurs at a portion of a path leading to the license issuing computer which stores given information as seen from the user terminal.

It is an object of the present invention to provide a method and a system in which when the issuance of a license key is performed from a person who licenses a program to a user through a selling agent or the like on line, information necessary for the issuance of a license key which is obtained by eliminating information which the selling agent or the like wants to conceal from information which the user transmits at the time of requesting the issuance of the license key whereby the issuance of the license key can be promptly performed from the person who has issued the license to the user through the selling agent or the like.

It is another object of the present invention to provide a method and a system in which a trial license key which allows a client to use a program for a given period is issued and when the dead line of the trial period is about to come during the use of the trial license key, a special license key which extends the trial period can be issued. Further, even when a failure of a license issuing computer equipment or a failure of a circuit occurs by a chance at the time of issuing the special license key, to prevent such a failure from affecting the user, processing for issuing a special license key for extending the period can be performed by a license issuing computer at a service-provider side via communication means (a facsimile, an electronic mail, telephone or the like) with the service provider from a route separate from the system.

Further, the trial period of the trial license key can be extended by using a special license key which is described in a product manual or an electronic medium such as a CD-ROM or the like which is packaged together with a program at the time of shipping the program.

It is still another object of the present invention to provide a method and a system in which to minimize the possibility that the service provider can not recover the payment of the fair paid license key depending on the degree of the extension of the period, services which are different depending on the order of trial periods set by the service provider can be realized as new value-added services. To be more specific, means which issues a license key having a high disc capacity to a user of a short trial period is offered to a client as an added value from a viewpoint of service.

To solve the above-mentioned tasks, the present invention provides a license issuing system which includes a license issuing computer, a seller computer, a purchaser computer, and a network which connects the license issuing computer, the seller computer and the purchaser computer wherein the improvement is characterized in that the seller computer requests the inputting of client information, product information and license program information to the purchaser computer, the purchaser computer transfers the client information, the product information and the license program information to the seller computer, the seller computer transfers the product information and the license program information out of the client information, the product information and the license program information received from the purchaser computer to the license issuing computer, and the license issuing computer issues a license key of a program specified by license program information to the purchaser computer through the seller computer upon normal completion of the authentication of the product information received from the seller computer.

Further, the present invention uses a client number to further ensure the confirmation whether the client is a genuine client or not so that the reliability of the confirmation is further enhanced. Here, the client number is a number which a service provider (a seller) allocates to a client without duplication when the client has purchased a product. Further, the product information is information which a person which licenses a program identifies the product. In this invention, a product number can be used as the product information. The product number refers even when the products are same products. Identification information including these product numbers and client numbers is preliminarily registered in a file storage disc (disc) of the license issuing computer as an authentication key and check operation whether an access is to be allowed or not is performed based on the coinciding of this information of the information data base (DB) and input client number and product number.

Further, the present invention provides a trial license key which can use a product program on a trial basis to a user. The user can use the product program by acquiring the license key via the network.

Further, the present invention, when the user acquires the trial license key and uses the product program on a trial basis, issues a special license key which allows the extension of the period of the trial license key to the user who requests the extension of the period because of the immediate coming of the dead line of the trial period. Here, the user communicates the name of the license program and the trial license key besides the product information or the like to the license issuing computer through the seller computer, and the license issuing computer issues a special license key to the client through the seller computer when these information coincide with the trial license key information held by the license issuing computer.

Further, in case a failure of the license issuing computer or a failure of a circuit occurs when the user receives the issuance of the special license key, the user communicates the client information, the product information, the name of the license program and the trial license key to the license issuing computer through the seller by using a route such as a facsimile, an electronic mail, a telephone or the like separate from the system. The license issuing computer issues the special license key to the client through the seller computer when these information coincide with the trial license key information held by the license issuing computer.

Further, as means to provide the special license key to extend the trial period, by describing the special license key in a product manual stored in an electronic medium such as a CD-ROM or the like which is packaged together with a disc sub system device at the time of shipping such a sub system device, the extension of the period can be performed using the special license key in emergency.

Further, in the present invention, it is designed such that in case the client receives the issuance of the paid license key, when the trial period with the free-of-charge trial user license key is short, the user can receive the license key having high functions or high values. The license key having high functions or high values means a license key having a high memory capacity which can be used in trial when the license is a license related with a program of the data storage system, for example.

### Brief Explanation of the Drawings

Fig. 1 is a view illustrating an entire constitution of a system which performs a license key issuing method according to the present invention.

Fig. 2 is a flow chart of the license key issuing method based on a first embodiment of the present invention.

Figs. 3 to 8 are views illustrating first to sixth embodiments of the present invention.

Fig. 9 is a view showing a cost system table of a product program of the sixth embodiment of the present invention illustrated in Fig. 8.

Fig. 10 is a view showing the content of services of the sixth embodiment of the present invention.

### Description of the preferred embodiments

Preferred embodiments of the present invention are explained in detail hereinafter in conjunction with attached drawings.

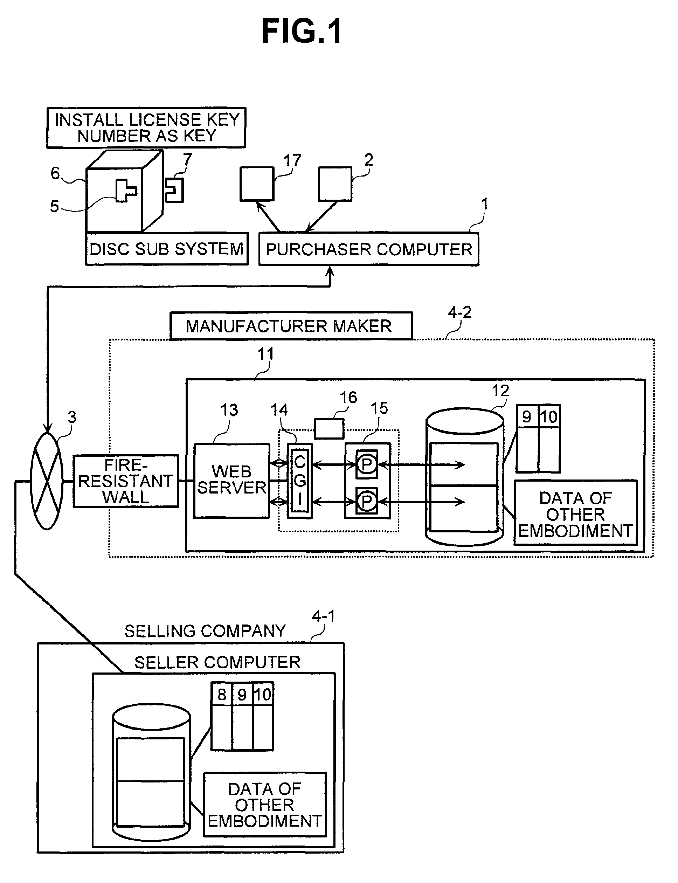

An embodiment of the present invention is explained based on Fig. 1. Fig. 1 is a view which shows an entire constitution of a system which performs a license issuing method according to the present invention. Here, the explanation is made by taking a program for operating a disc sub system device as a program which becomes an object of a license. As a purchaser computer 1, either one of a PC (personal computer) and a work station which incorporates, for example, a display, a driver such as a keyboard, mouse or the like, an OS, a WWW (world wide web) browser is used, and the purchaser computer 1 has a constitution which enables the connection thereof with the network. Users get access to a home page provided by a license issuing computer 11 or a seller computer from the purchaser computer 1. The purchaser computer 1 is connected to a selling company 4-1 and a manufacturer 4-2 which constitutes a license issuing person through Internet 3 and hence, the selling company 4-1 and the manufacturer 4-2 can identify the purchaser computer 1.

The function of the product program for operating the disc sub system device 6 shown in Fig. 1 is available to the user when the user inputs a key code 5. In the present invention, the issuance of the license key is performed through the network. Here, the flow of processing for acquiring the license key by making use of the system of this embodiment is explained.

First of all, as a method for issuing a license key 7 making use of the network, there exists a method which designates a URL (Uniform Resource Locator, that is, a site of a home page to be accessed) by the WWW browser. The URL for acquiring the license key 7 is communicated to the client at the time of shipping the disc sub system device 6 product. This URL is usually possessed by the selling company. In an information data base (DB) possessed by a license issuing computer 11 at a manufacturing maker, a program which performs the transfer of information between the information data base 12 and a seller computer and issues a license key and information such as a product number 9, a license program name 10 and the like while excluding client information 8 are stored. An access to a WWW server 13 of the license issuing computer 11 can be performed through a WWW server of the seller company computer. When the WWW server 13 receives the access, the WWW server 13 starts a license issuing program 15 through a CGI (Common Gateway Interface) 14 and transfers information transmitted from the seller computer to the license issuing program 15.

Further, in the seller computer, information such as the client information 8, the product number 9, the license program name 10 and the like, a program which allows the inputting of these information, and a program which transmits the information such as the product number 9, the license program name 10 and the like while excluding the client information 8 to the license issuing computer 11 are stored. The program which allows the inputting of the data may be stored in the DB 12 of the license issuing computer 11. The program which allows the inputting of the data can be accessed from the purchaser computer 11 and the data inputting to the purchaser computer is performed by the purchaser. The program which transmits information to the license issuing computer transmits the product number 9, the license program name 10 and the like to the license issuing computer by eliminating the client information from the information input from the purchaser computer.

When the user accesses the seller computer from the purchaser computer 1 via the WWW server, a message which requests the inputting of an encrypted number is displayed on a display on the WWW browser of the purchaser computer 1. When the user inputs the encrypted number, the seller computer performs the collation of the encrypted number. When the encrypted number is correct, the purchaser computer 1 transmits a start request for starting the utilization of the license issuing computer 11 to the license issuing computer 11. Thereafter, based on a program which allows the inputting of information such as the client information 8, the product number 9, the license program name 10 or the like of the seller computer, a message which requests the inputting of information such as the client information 8, the product number 9, the license program name 10 or the like is displayed on the WWW browser of the purchaser computer 1. When the user inputs the client information 8, the product number 9 and the license program name 10 using an inputting screen, these information are transferred to the seller computer. The seller computer eliminates the client information 8 from the client information 8, the product number 9 and the license program 10 and then transfers the product number 9 and the license program name 10 to the license issuing computer.

Upon receiving the start request for starting the utilization of the license issuing computer 11, the license issuing computer 11 starts the licensing key issuing service. The license issuing computer 11 performs the checking whether the received product number 9 is fair data or not. When the product number is unfair, the license key issuing service is interrupted.

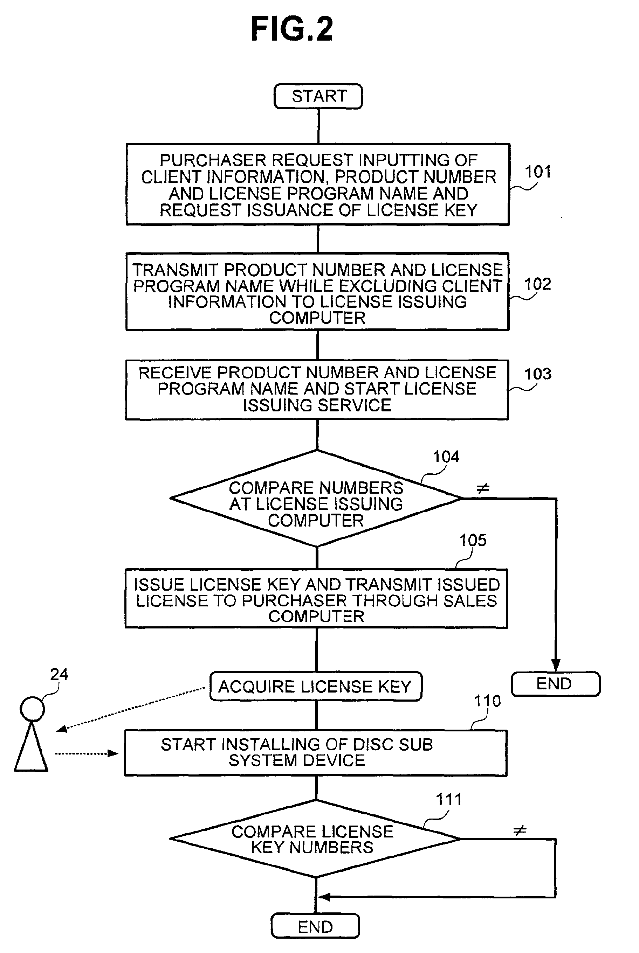

When the authentication of the product number 9 is normally completed, the license key is issued from the license issuing computer 11 through the seller computer and is displayed on the WWW browser of the purchaser computer 1. The user inputs this license key to the disc sub system and compares the license key with a key code 5 which is already installed in a disc sub drive system device 6 and if the license key and the key code 5 coincide, it becomes possible to install a desired operational product program in the disc sub system device 6. Subsequently, the entire constitution of a network system of the embodiment in which the program license key of the disc sub system device according to the present invention is applied to an electronic commerce system is equal to that of a flow chart of Fig. 2 showing the operation procedure which will be explained later. However, they differ in the constitution of the license issuing computer and the data processing procedure. With respect to the constitutions in common in terms of the execution, they are explained by adding the same symbols.

Then, the manner of acquiring the license key 7 shown in Fig. 1 is explained in conjunction with the flow chart showing the operational steps of Fig. 2.

In step 101, the purchaser inputs the client information 8, the product number 9, the license program name 10 at the purchaser computer 1 and requests the seller computer to issue the license key.

In step 102, the seller computer eliminates the client information 8 from the information transmitted from the purchaser computer and then transmits the information including the product number 9 and the license program number 10 to the license issuing computer 11 of the manufacturing maker and requests the issuing of the license key.

In step 103, the license issuing computer 11 receives the information including the product number 9 and the license program name 10 and starts the license issuing program and starts the license issuing service.

In step 104, the license issuing computer 11 compares the received product number 9 with the information which has been already registered in the information database (DB) 12. When they coincide as the comparison result, the license key 7 is issued in step 105. The issued license key 7 is transmitted by the purchaser computer 1 to the user 24 via the seller computer and the user 24 can acquire the license key (step 106). Further, when it is judged that the authentication is a failure, the license issuing service is finished.

The user 24 installs the product program in the disc sub system device 6 using the acquired license key 7 (step 110).

In step 111, the authentication of the license key 7 input at the time of installing is performed and when it is judged that the license key 7 fails in the authentication, the processing is finished.

In the above-mentioned embodiment, although the system-side mechanism is particularly explained, embodiments and applications on specific contents of services to clients are explained hereinafter.

### Embodiment 1

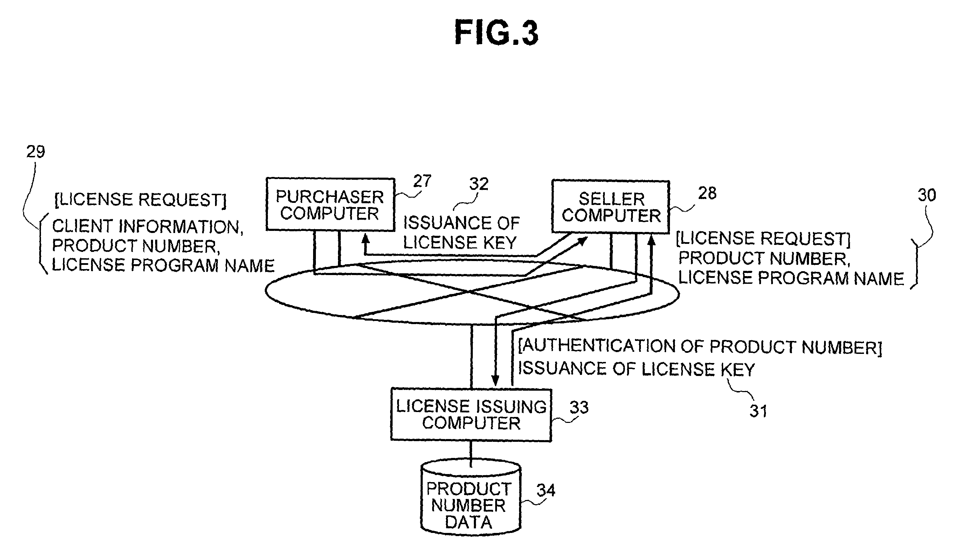

Fig. 3 is a view which shows a license key issuing service to which a program license key electronic commerce system of the disc sub system device of the first invention is applied. The constitution of the network system of this embodiment is identical with the constitutions of other embodiments which are explained later and differs from the constitutions of these embodiments in the constitution of the license issuing computer, the data processing procedure and the like. The constitutions common in all embodiments are explained using the same symbols.

The licensing issuing system of this embodiment is comprised of a purchaser computer 27, a seller computer 28, a license issuing computer and a network to which respective computers are connected. In this license issuing system, a client acquires a license key which makes various product programs of a disc sub system device operable from an information storage license issuing computer 33 on a network using a product number. In acquiring the license key to make the various product programs of the disc sub system device operable, the purchaser computer 27 transmits client information and a license program name (29) besides information including the product number which identifies the purchaser to the seller computer 28 as a license request.

Subsequently, the seller computer 28 transmits the product number and the license program name (30) which constitute the license key issuing condition from which the client information is eliminated to the license issuing computer 33.

The license issuing computer 33 compares the product number transmitted from the seller computer 28 with product number data 34 which the license issuing computer 33 possesses and has been already shipped to the client and performs the detection of the product number transmitted from the seller computer. When these product numbers coincide with each other, the license key is transmitted to the seller server based on the desired license program name.

Thereafter, the seller computer 28 issues the license key to the purchaser computer 27.

### Embodiment 2

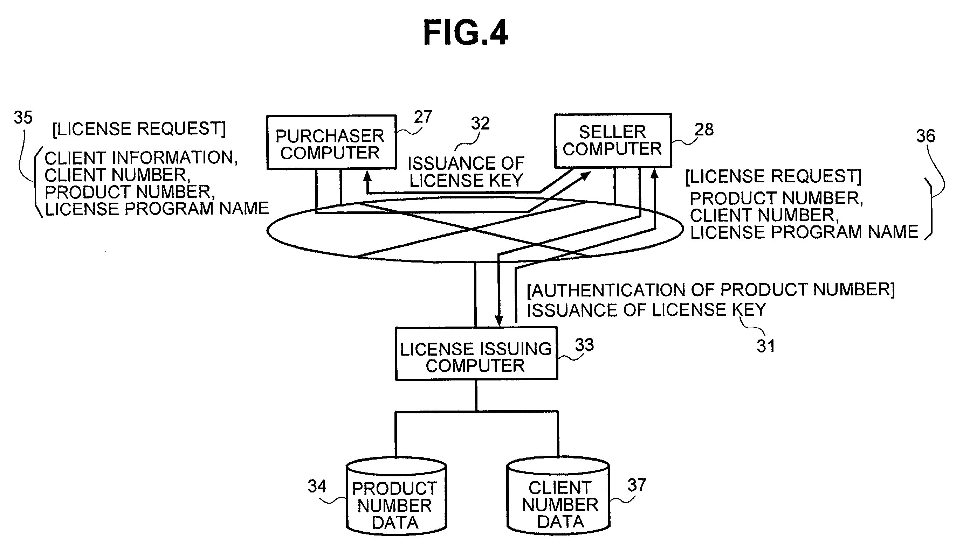

Fig. 4 shows a second embodiment of the license key issuing service according to the present invention. The second embodiment reinforces the confirmation means related to the purchaser compared to the first embodiment.

To receive the issuance of a license key from a license issuing computer 33 connected to a network, a user transmits client information and a license program name (35) besides information including a product number and a client number for identifying the purchaser which are necessary for acquiring the license key to make various product programs of a disc sub system device operable to a seller computer 28.

The seller computer 28 eliminates the client information from the information transmitted from the user and transmits the product number, the client number and a license program name (36) which constitute the license key issuing condition to the license issuing computer 33.

The license issuing computer 33 possesses data on a product number 34 and a client number 37 which have been already shipped. The license issuing computer 33 performs the detection of the product number and the client number transmitted from the seller computer 28. When these product numbers and the client numbers respectively coincide with each other, the license key 31 is transmitted to the seller computer 28 based on the desired license program name.

Thereafter, the seller computer 28 issues the license key 32 to the purchaser computer 27 through the network.

### Embodiment 3

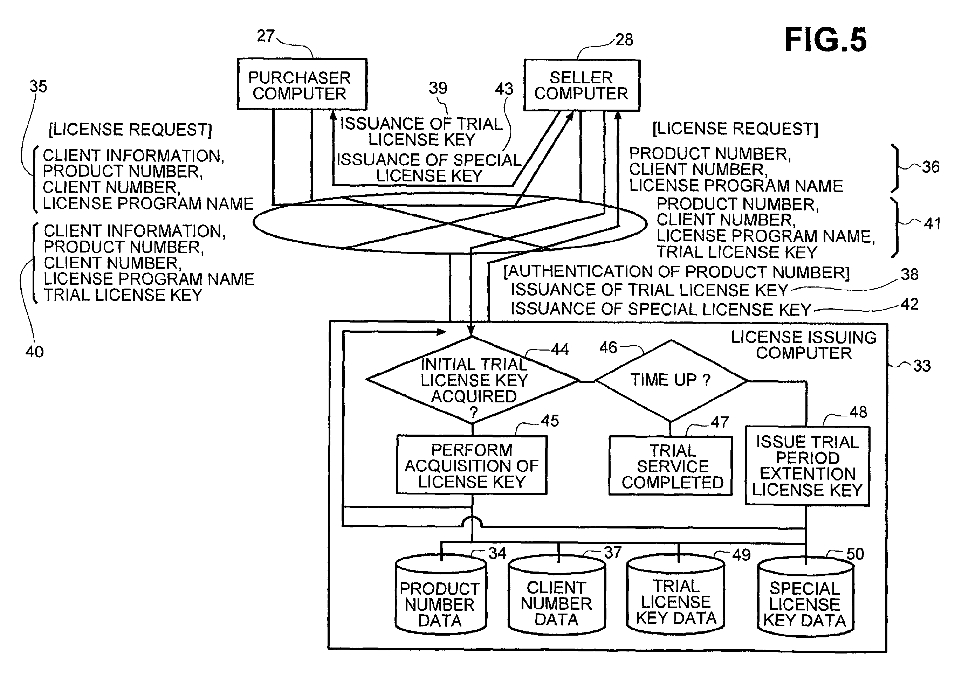

Fig. 5 is a view showing a third embodiment of the license key issuing method according to the present invention. The third embodiment issues a trial license key such that a product program can be used on a trial basis. Further, when a deadline of a trial period is coming very close and the extension of the trial period is necessary at the time of changing over a free-of-charge license key to a paid license key, the issuance of a special license key which is effective in extending the use deadline only once is performed.

To receive the issuance of a license key from a license issuing computer 33 connected to a network, using the purchaser computer 27, a user transmits client information and a license program name (35) besides information including a product number and a client number for identifying the purchaser which are necessary for acquiring a trial license key to make a product program of a disc sub system device operable to a seller computer 28.

The seller computer 28 eliminates client information transmitted from the purchaser computer 27 and transmits the product number, the client number and a license program name (36) which constitute the trial license key issuing condition to the license issuing computer 33.

The license issuing computer 33 possesses data on a product number 34 and a client number 37 which have been already shipped to the client therein. The license issuing computer 33 performs the detection 44 of the product number and the client number. When these product numbers and the client numbers respectively coincid with each other, a trial license key 38 is transmitted to the seller computer 28 based on the desired license program name.

Thereafter, the seller computer 28 issues a trial license key 39 to the purchaser computer 27 through the network.

Further, when a deadline of a trial period is coming very close during the trial and purchaser requests the extension of the trial period, to obtain a special license key 43 for extending the deadline of the trial period from the license issuing computer 33 through the seller, the client information, the license program name and the trial license key (40) are transmitted to the seller computer 28 besides information including the product number and the client number for identifying the purchaser.

The seller computer 28 eliminates the client information from the information transmitted from the purchaser computer 27 and transmits information necessary of issuing the special license key which includes the product number, the client number and a trial key license program name (41) to the license issuing computer 33.

The license issuing computer 33 possesses information on the trial license key 49 which has already been issued to the client therein. When the product number, the client number and the trial license key which are transmitted from the seller computer 28 coincide with information possessed by the license issuing computer 33, the license issuing computer 33 transmits a special license key 42 for extending the deadline of trial period based on the transmitted license program name.

The seller computer 28 issues the special license key 43 which is effective only once to the purchaser computer 27 through the network.

### Embodiment 4

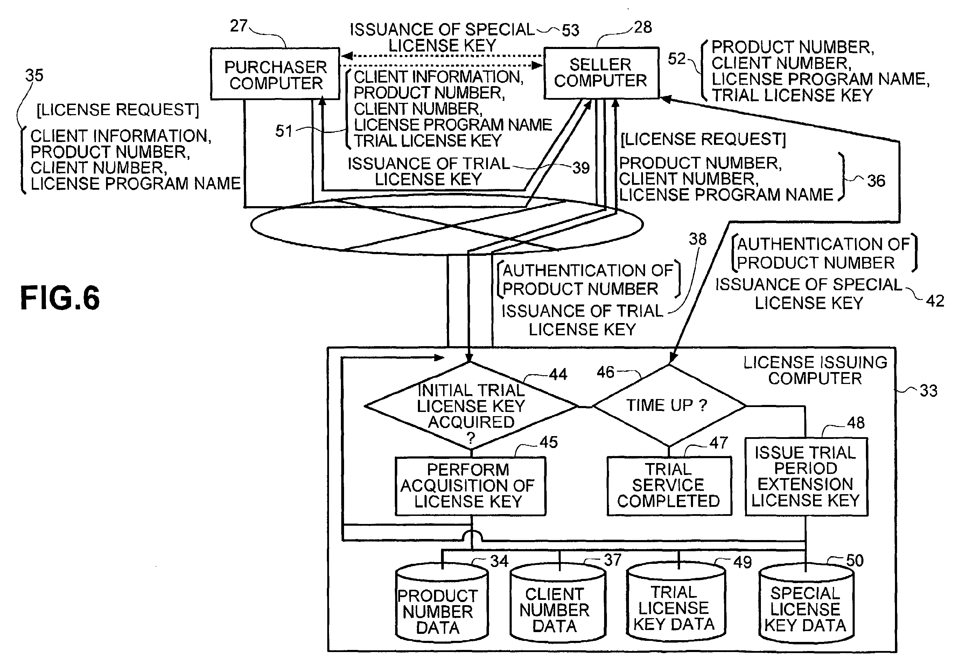

Fig. 6 is a view showing a fourth embodiment of the program license key issuing method according to the present invention. The fourth embodiment offers a service in which a product program thereof can be used on a trial basis and, when a deadline of a trial period is coming very close and the extension of the deadline of the trial period is necessary, a license key for extending or a paid license key can be issued from a route separate from the system.

In receiving the issuance of a license key from a license issuing computer 33 connected to a network, to acquire a trial license key which makes the product program of a disc sub system device which a user wants to use on a trial basis from the purchaser computer 27 operable, a user transmits client information and a license program name (35) besides information including a product number and a client number for identifying the purchaser to a seller computer 28.

The seller computer 28 eliminates client information from the information transmitted from the purchaser computer and transmits information necessary for issuing the trial licensing key including the product number, the client number and a license program name (36) to the license issuing computer 33.

The license issuing computer 33 possesses data on a product number 34 and a client number 37 which have been already shipped to the client therein. Then, the license issuing computer 33 performs the detection 44 of the product number and the client number transmitted from the seller computer 28. When these product numbers and the client numbers respectively coincide with each other, a trial license key 38 is transmitted to the seller computer 28 based on the license program name transmitted from the sellers computer 28.

Thereafter, the seller computer 28 issues a trial license key 39 to the purchaser computer 27 through the network.

Further, when a deadline of a trial period is coming very close during the trial and the purchaser changes over the trial license key to the paid license key, if a failure of the license issuing computer 33 or a failure of a circuit occurs, as means to extend the deadline of the trial period, the user performs the issuance of a special key for extending the deadline of trial period of the program using a route separate from the system such as a facsimile, an electronic mail, a telephone or the like. In this case, the purchaser communicates the client information, the name of the license program and the trial license key to the seller by using a route such as a facsimile, an electronic mail, a telephone or the like besides information including the product number which identifies the purchaser.

The seller computer 28 has means to input the product number, the license program name, the trial license key and the like which are communicated from the purchaser therein. Here, the seller eliminates the client information from the information transmitted from the purchaser and communicates information necessary of issuing the special license key which includes the product number, the license program name and the trial license key to the license issuing computer 33.

The license issuing computer 33 possesses data on a trial license key 49 which has been already shipped to the client therein. Then, the license issuing computer 33 performs the detection of the product number and the trial license key transmitted from the seller computer 28. When the product number and the trial license key which are transmitted from the seller computer 28 coincide with information possessed by the license issuing computer 33, the license issuing computer 33 transmits a special license key 53 for extending the deadline of trial period based on the transmitted license program name to the seller computer 28.

The seller computer 28 has means to output the license key transmitted from the license issuing computer. Here, the seller outputs the special license key transmitted from the license issuing computer 33 and transmits the special license key to the purchaser through a route separate from the system such as a facsimile, an electronic mail, a telephone or the like.

### Embodiment 5

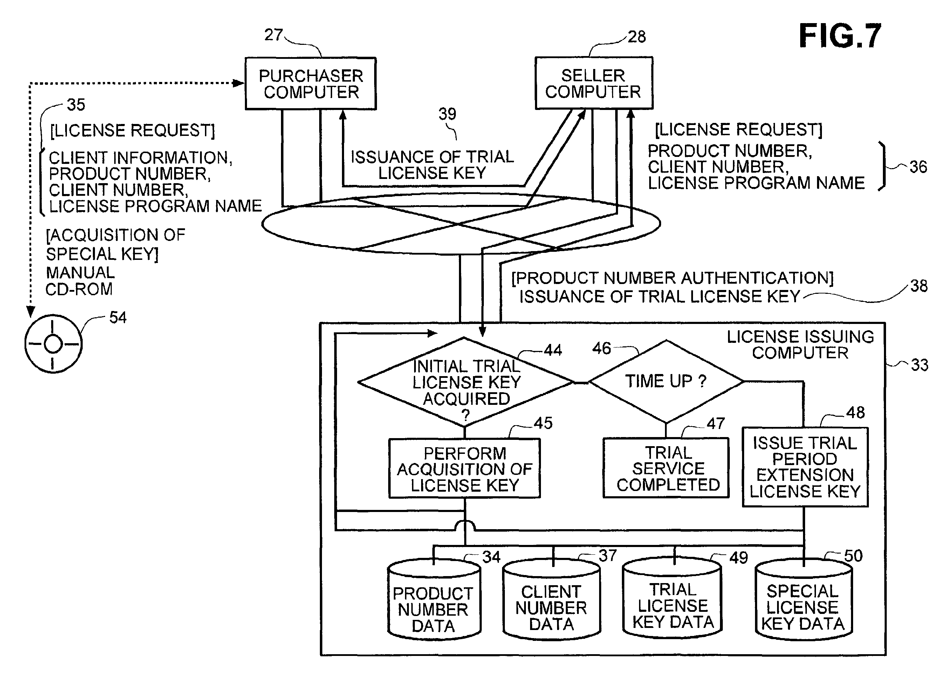

Fig. 7 shows a fifth embodiment of the program license key issuing method according to the present invention. The fifth embodiment provides a service in which when a product program can be used on a trial basis and the deadline of a trial period is coming very close so that the extension of the deadline of the trial period is necessary, the extension of the deadline of the trial period can be performed based on information described in a manual packaged together with a device.

To receive the issuance of a license key from a license issuing computer 33 connected to a network, a user transmits client information and a license program name (35) besides information including a product number and a client number for identifying the purchaser which are necessary for acquiring the trial license key to make product programs of a disc sub system device operable on a trial basis from a purchaser computer 27 to a seller computer 28.

The seller computer 28 eliminates the client information from the information transmitted from the purchaser computer 27 and transmits the product number and a license program name which are necessary for issuing the trial licensing key to the license issuing computer 33.

The license issuing computer 33 possesses data on a product number 34 and the like which have been shipped to the client. The license issuing computer 33 performs the detection of the product number transmitted from the seller computer 28. When these product numbers respectively coincide with each other, the trial license key 38 is transmitted to the seller computer 28 based on the transmitted license program name.

Thereafter, the seller computer 28 issues the trial license key 39 to the purchaser computer 27 through the network.

Further, when a deadline of a trial period is coming very close during the trial and the purchaser changes over the trial license key 39 to the paid license key, to cope with a situation in which a failure of a license issuing computer 33 or a failure of a circuit occurs in advance, the special license key which allows the extension of the deadline of the trial period is described in a manual or a CD-ROM packaged together with a product at the time of shipping the product and the extension of the period is performed using this special license key. In this case, the trial period may be extended by using a special license key described in a product having a product number communicated from the client at the time of issuing the trial license key.

According to the above-mentioned embodiments 3 - 5, when the deadline of the trial period is coming very close during the use of the product program on a trial basis so that the extension of the deadline of the trial period is necessary, the interruption of the operation due to the expiration of the period can be obviated by providing the license key which allows the extension of deadline of the period to the user.

### Embodiment 6

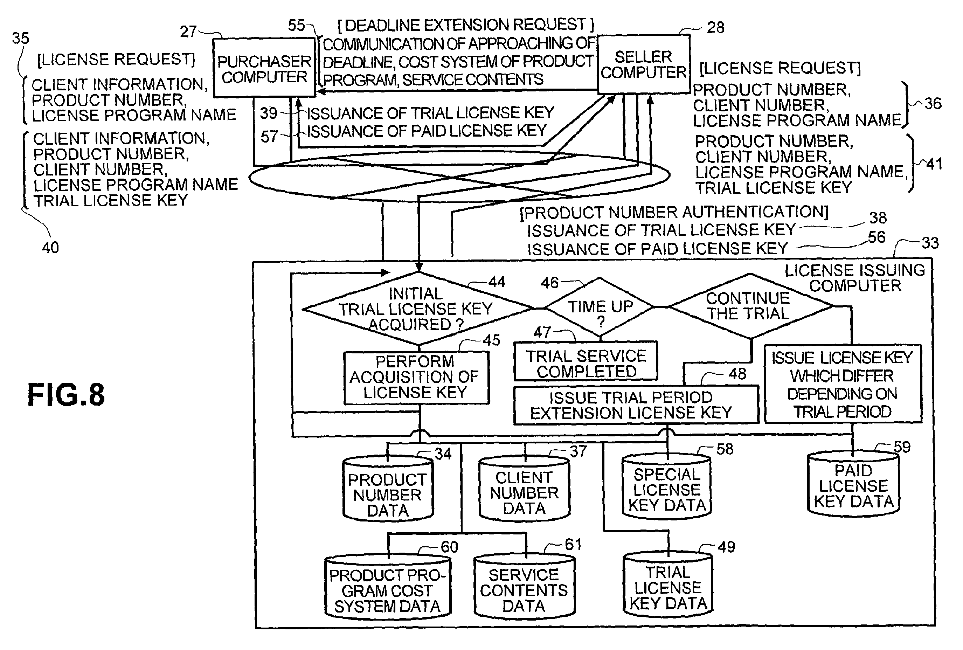

Fig. 8 is a view showing a sixth embodiment of the program license key issuing method according to the present invention. The sixth embodiment provides information of a service in which when a product program can be used on a trial basis and the deadline of a trial period is coming very close so that the extension of the deadline of the trial period is necessary, the extension of the deadline of the trial period can be performed and information of a service in which the shorter the trial period, a disc use capacity can be increased is provided and the license key is issued depending on the request of the client.

In receiving the issuance of a license key from a license issuing computer connected to a network, a user transmits client information and a license program name (35) besides information including a product number and a client number for identifying the purchaser which are necessary for acquiring a trial license key to make product programs of a disc sub system device operable on a trial basis from a purchaser computer 27 to a seller computer 28.

The seller computer 28 eliminates the client information transmitted from the purchaser computer and transmits the product number and a license program name (36) which are information necessary for issuing the trial licensing key to the license issuing computer 33.

The license issuing computer 33 possesses data on the product number 34 and the client number 37 which have been already shipped to the client. The license issuing computer 33 performs the detection 44 of the product number and the client number transmitted from the seller computer 28. When these product numbers and the client numbers respectively coincide with each other, the trial license key 38 is transmitted to the seller computer 28 based on the transmitted license program name. Subsequently, the seller computer 28 issues the trial license key 39 to the purchaser computer 27.

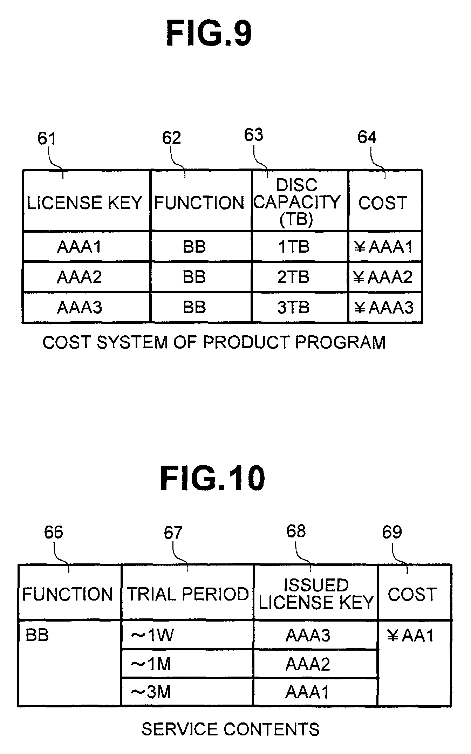

Further, when a deadline of a trial period set by the trial license key 39 is coming very close and the continuation of the trial is necessary, a communication of the expiration of period, a cost system table of the product program (Fig. 9) and service contents (Fig. 10) are transmitted to the purchaser.

The purchaser refers to the communicated cost system table of the product program (Fig. 9) and service contents (Fig. 10) and judges whether the trial is to be continued or to be changed over to a paid license. Fig. 9 shows the cost system of the product program and Fig. 10 shows the service contents. Information on the communicated cost system table of the product program (Fig. 9) are stored in information data bases (DBs) 56, 61 of the license issuing computer 33. When the purchaser continues the trial, a special license key is issued. When the purchaser wants to change over the trial license to the paid license, the paid license key is issued.

The cost system (Fig. 9) of the usual product program is constituted by respective AAA1 - AAA3 of the paid license key 61. Although their functions are equal, a cost 64 is set such that it is increased proportional to the sub-system capacity 63.

On the other hand, the service contents (Fig. 10) of the license issuing computer 33 are constituted by information including information 66 which identify functions, a trial period 67, a paid license key 68 and information on cost 69.

This service issues a paid license key corresponding to the length of the trial period. As shown in Fig. 10, the license key 68 having a high capacity which is determined by the numeral 63 of the sub system capacity of Fig. 9 is issued depending on the trial period 67 at the same cost 69 and this gives a great advantage to the purchaser.

The purchaser judges whether the trial is to be continued or is to be changed over to a paid use based on a proposal from the seller. When the issuance of the paid license key is necessary, the purchaser transmits the client information, the license program name and the trial license key besides information including the product number and the client number for identifying the purchaser from the purchaser computer 27 to the seller computer 28.

The seller computer 28 excludes the client information from the information transmitted from the client computer 27 and transmits the product number, the license program name and the trial license key which are necessary for issuing the paid license key to the license issuing computer 33.

The license issuing computer 33 possesses the trial license key information which has been issued to the client. The license issuing computer 33 performs the detection of the product number and the trial license key transmitted from the seller computer. When they coincide with each other, the paid license key corresponding to the trial period 67 of Fig. 10 is transmitted to the seller computer 28 based on the transmitted license program name.

Thereafter, the seller computer 28 issues the paid license key to the purchaser computer 27.

According to the above-mentioned embodiment, when the license key reaches a given time and is changed over to the paid license key, upon shortening of the trial period by the client, the service which issues the license key having a high disc capacity of the disc sub system device is provided to the user. Accordingly, the possibility that the user who have been hesitating to purchase the service in view of the cost will use the service and hence, it is considered that this leads to the expansion of the sales of the programs. Further, as a method for making the best use of the communication of a higher level which may be directly connected with the enhancement of the achievement as a differentiation strategy on marketing, in the course that the client selects the product which the client wants, this system can give rise to a new request by pulling out the potential needs whether the trial period is to be extended or the paid license key is to be acquired. That is, to minimize the possibility that the service provider cannot recover the fair payment for the paid license key, the license provider issues the license key having the high disc capacity corresponding to the trial period.

As has been explained heretofore, according to the present invention, when the license issuing person of the program issues the license key through the seller, the agents or the like of the program on line, it becomes possible to keep the business information including the client information of the seller and the agent of the program in secret against the license issuing person.

Further, according to the present invention, when the SAN is built up in the data storage system, even when the change of constitution the SAN or the like is performed, the user can readily receive the issuance of the license for the optional program which becomes necessary.

Further, according to the present invention, by issuing the license key which allows the use of the program for a given period or the license key which allows the extension of the use period, the possibility that the user can use the program is increased and an advantageous effect that it leads to the expansion of the sales of the program can be obtained.

## Claims

1. A license key issuing system comprising:
a network which connects a license issuing computer, a seller computer and a purchaser computer,
the purchaser computer having means to input client information, product information and license program information, the purchaser computer requesting the license issuing computer to issue issuance of a license key by inputting the client information, the product information and the license program information,
the seller computer receiving the client information, the product information and the license program information from the purchaser computer and requesting the issuance of the license key together with the product information and the license program information, the seller computer transmitting the license key to the purchaser computer upon receiving the license key from the license issuing computer, and
the license issuing computer having license key issuing means, the license issuing computer receiving the product information and the licensing program information from the seller computer and issuing a license key of a program specified by the license program information through the seller computer to the purchaser computer when the authentication of the product information is normally finished,

2. A license issuing computer which is connected to a network and issues a license key through the network, the license issuing computer including:
a program which allows the license issuing computer to receive product information and license program information out of client information, the product information and the license program information which a purchaser inputs from a seller computer through a network, and
a program which performs the authentication of the product information and issues a license key of a program specified by the license program information when the authentication is normally finished.

3. A seller computer which requests the issuance of a license key to a license issuing computer in response to a request from a purchaser computer through a network, the seller computer including:
a program which requests the inputting of client information, product information and license program information to the purchaser computer through the network,
a program which receives the client information, the product information and the license program information from the purchaser computer through the network and transmits the product information and the license program information to the license issuing computer, and
a program which receives the license key from the license issuing computer and transmits the license key to the purchaser computer.

4. A license issuing computer which is connected to a network and performs the issuance of a license key for a program to be installed in a data storage system through the network, the license issuing computer including:
a program which allows the license issuing computer to receive product information and license program information out of client information, the product information and the license program information which a purchaser inputs from a seller computer through a network, and
a program which performs the authentication of the product information and issues a license key for a program specified by the license program information when the authentication is normally finished.

5. A licensing issuing method of a license issuing system comprising a license issuing computer, a seller computer, a purchaser computer, and a network which connects the license issuing computer, the seller computer and the purchaser computer, wherein
the license issuing computer requests the inputting of client information, product information and license program information to the purchaser computer through the seller computer,
the purchaser computer transfers the client information, the product information and the license program information to the seller computer in response to the request from the license issuing computer,
the seller computer transfers the product information and the license program information out of the client information, the product information and the license program information received from the purchaser computer to the license issuing computer, and
the license issuing computer issues a license key for a program specified by the license program information to the purchaser computer through the seller computer when the authentication of the product information received by the seller computer is normally finished.

6. A license issuing method of a license issuing computer which is connected to a network and performs the issuance of a license key through the network, the license issuing method including:
a step in which the license issuing computer receives product information and license program information out of client information, the product information and the license program information which a purchaser inputs from a seller computer through the network,
a step in which the license issuing computer performs the authentication of the product information, and
a step in which the license issuing computer issues a license key for a program specified by the license program information when the authentication is normally finished.

7. A data transfer method of a seller computer requesting the issuance of a license key to a license issuing computer in response to a request from a purchaser computer through a network, the data transfer method including
a step in which the seller computer receives client information, product information and license program information from the purchaser computer,
a step in which the seller computer transmits the product information and the license program information to the license issuing computer,
a step in which the seller computer receives a license key from the license issuing computer, and
a step in which the seller computer transmits the license key to the purchaser computer.

8. A license issuing method of a license issuing computer which is connected to a network and performs the issuance of a license key for a program installed in a data storage system by way of the network, the license issuing method including:
a step in which the license issuing computer receives product information and license program information out of client information, the product information and the license program information which a purchaser inputs from a seller computer through the network,
a step in which the license issuing computer performs the authentication of the product information, and
a step in which the license issuing computer issues a license key for a program specified by the license program information when the authentication is normally finished.

9. A license issuing computer which is connected to a network and performs the issuance of a license key through the network, the license issuing computer including:
a program which allows the license issuing computer to receive product number and license program name out of client information, the product number and the license program name which a purchaser inputs from a seller computer through a network, and
a program which performs the authentication of the product information and issues a license key for a program specified by the license program name when the authentication is normally finished.

10. A license issuing method of a license issuing computer which is connected to a network and performs the issuance of a license key through the network, the license issuing method including:
a step in which the license issuing computer receives product number and license program name out of client information, the product number and the license program name which a purchaser inputs from a seller computer through a network,
a step in which the license issuing computer performs the authentication of the product number, and
a step in which the license issuing computer issues a license key for a program specified by the license program name when the authentication is normally finished.

11. A license issuing computer which is connected to a network and performs the issuance of a license key through the network, the license issuing computer including:
a program which allows the license issuing computer to receive client number, product number and license program name out of client information, the client number and the product number and the license program name which a purchaser inputs from a seller computer through the network, and
a program which performs the authentication of the product number and issues a license key for a program specified by the license program name when the authentication is normally finished.

12. A license issuing computer which is connected to a network and performs the issuance of a license key through the network, the license issuing computer including:
a program which allows the license issuing computer to receive product number and license program name out of client information, the product number and the license program name which a purchaser inputs from a seller computer through the network, and
a program which performs the authentication of the product number and issues a trial license key which allows the use of a program specified by the license program name for a given period when the authentication is normally finished.

13. A license issuing computer which is connected to a network and performs the issuance of a license key through the network, the license issuing computer including:
a program which allows the license issuing computer to receive product number and license program name out of client information, the product number and the license program name which a purchaser inputs or the product number, the license program name and a trial license key out of the client information, the product number and the license program name and the trial license key which the purchaser inputs from a seller computer through the network, and
a program which performs the authentication of the product number and, when the authentication is normally finished, issues a trial license key which allows the use of a program specified by the license program name for a given time upon receiving the product number and the license program name or issues a special license key which extends the trial period by the trial license key upon receiving the product number, the license program name and the trial license key.

14. The license issuing computer of any one of claims 11 to 13 which issues a license for a program installed in a data storage system.

15. A license issuing method of a license issuing computer which is connected to a network and performs the issuance of a license key through the network, the license issuing method including:
a step in which the license issuing computer receives client number, product number and license program name out of client information, the client number, the product number and the license program name which a purchaser inputs from a seller computer through the network,
a step in which the license issuing computer performs the authentication of the product number, and
a step in which the license issuing computer issues a license key for a program specified by the license program name when the authentication is normally finished.

16. A license issuing method of a license issuing computer which is connected to a network and performs the issuance of a license key through the network, the license issuing method including:
a step in which the license issuing computer receives product number and a license program name out of client information, the product number and the license program name which a purchaser inputs from a seller computer through the network,
a step in which the license issuing computer performs the authentication of the product number, and
a step in which the license issuing computer issues a trial license key which allows the use of a program specified by the license program name for a given period when the authentication is normally finished.

17. A license issuing method of a license issuing computer which is connected to a network and performs the issuance of a license key through the network, the license issuing method including:
a step in which the license issuing computer receives product number and a license program name out of client information, the product number and the license program name which a purchaser inputs from a seller computer through the network,
a step in which the license issuing computer performs the authentication of the product number,
a step in which the license issuing computer issues a trial license key which allows the use of a program specified by the license program name for a given period when the authentication is normally finished,
a step in which the license issuing computer receives the product number, the license program name and the trial license key out of client information, the product number, the license program name and the trial license key which a purchaser inputs from the seller computer through the network,
a step in which the license issuing computer performs the authentication of the trial license key, and
a step in which the license issuing computer issues a special license key which extends a trial period by the trial license key when the authentication is normally finished.

18. The license issuing method of any one of claims 15 to 17 which issues the license for a program installed in a data storage system.

19. A seller computer which requests a trial license key which allows the use of a program for a given period and a special license key which extends a trial period of the trial license key to a license issuing computer in response to a request from a purchaser computer through a network, the seller computer including:
means for inputting a product number, a license program name and a trial license key communicated from a purchaser,
means for outputting the license key received from the license issuing computer,
a program which requests the inputting of the client information, the product number and the license program name to the purchaser computer through the network,
a program which receives the client information, the product information and the license program information from the purchaser computer through the network and transmits the product information and the license program information to the license issuing computer or transmits the product number, the license program name and the trial license key input by the inputting means to the license issuing computer, and
a program which receives the trial license key from the license issuing computer and transmits the license key to the purchaser computer or receives the special license key from the license issuing computer and outputting the special license key from the outputting means.

20. A data transfer method of a seller computer requesting the issuance of a license key to a license issuing computer in response to a request from a purchaser computer through a network, the data transfer method including:
a step in which the seller computer receives client information, a product number and a license program name from a purchaser computer,
a step in which the seller computer transmits the product number and the license program name to the license issuing computer,
a step in which the seller computer receives a trial license key which allows the use of the program for a given period from the license computer,
a step in which the seller computer transmits the license key to the purchaser computer,
a step in which the seller computer inputs the client information, the product number, the license program name and the trial license key communicated from a purchaser therein,
a step in which the seller computer transmits the product number, the license program name and the trial license key to the license issuing computer,
a step in which the seller computer receives a special license key for extending the deadline of the trial period by the trial license key from the license issuing computer, and
a step in which the seller computer outputs the special license key and transmits the special license key to the purchaser.

21. A license issuing method of a license issuing computer which is connected to a network and performs the issuance of a license key through the network, the license issuing method including:
a step in which the license issuing computer receives product number and a license program name out of client information, the product number and the license program name which a purchaser inputs from a seller computer through the network,
a step in which the license issuing computer performs the authentication of the product number, and
a step in which the license issuing computer allows the use of a program specified by the license program name for a given period and issues a trial license key which can extend the trial period by a given special license key when the authentication is normally finished.

22. A license issuing method of a license issuing computer which is connected to a network and performs the issuance of a license key through the network, the license issuing method including:
a step in which the license issuing computer receives a product number and a license program name out of client information, the product number and the license program name which a purchaser inputs from a seller computer through a network,
a step in which the license issuing computer performs the authentication of the product number,
a step in which the license issuing computer issues a trial license key which allows the use of a program specified by the license program name for a given period when the authentication is normally finished,
a step in which the license issuing computer receives the product number, the license program name and the trial license key out of client information, the product number, the license program name and the trial license key which a purchaser inputs from the seller computer through the network,
a step in which the license issuing computer performs the authentication of the trial license key, and
a step in which the license issuing computer issues a paid license key which exhibits a higher function as the trial period becomes shorter.

23. A license issuing computer which is connected to a network and performs the issuance of a license key through the network, the license issuing computer including:
a program in which the license issuing computer receives a product number and a license program name input by a purchaser or the product number, the license program name and a trial license key input by the purchaser through the network,
a program in which the license issuing computer performs the authentication of the product number when the product number and the license program name are received, and issues the trial license key which allows the use of a program specified for the license program name for a given period when the authentication is normally finished, and
a program in which the license issuing computer performs the authentication of the trial license key when the license issuing computer receives the license program name and the trial license key and has a program which issues a paid license key which exhibits a higher function as the trial period becomes shorter.

24. The license issuing computer of claim 23, which issues a license for a program installed in a data storage system.

25. The license issuing computer of claim 24, which issues the paid license key which has a larger usable disc capacity as the trial period becomes shorter.

26. A license issuing method of a license issuing computer which is connected to a network and performs the issuance of a license key through the network, the license issuing method including:
a step in which the license issuing computer receives a product number and a license program name which a purchaser inputs through the network,
a step in which the license issuing computer performs the authentication of the product number,
a step in which the license issuing computer issues a trial license key which allows the use of a program specified by the license program name for a given period when the authentication is normally finished,
a step in which the license issuing computer receives the product number, the license program name and the trial license key which the purchaser inputs through the network,
a step in which the license issuing computer performs the authentication of the trial license key, and
a step in which the license issuing computer issues a paid license key which exhibits a higher function as the trial period becomes shorter.

27. The license issuing method of claim 26, wherein the license issuing computer issues a license for a program installed in a data storage system.

28. The license issuing method of claim 27, wherein the license issuing computer issues the paid license key which has a larger usable disc capacity as the trial period becomes shorter.
